(19) Europäisches Patentamt
European Patent Office
Office européen des brevets

(11) **EP 3 891 882 B1**

(12) **EUROPÄISCHE PATENTSCHRIFT**

(45) Veröffentlichungstag und Bekanntmachung des Hinweises auf die Patenterteilung:
**24.05.2023   Patentblatt 2023/21**

(21) Anmeldenummer: **19832840.3**

(22) Anmeldetag: **28.11.2019**

(51) Internationale Patentklassifikation (IPC):
*H02P 6/182* (2016.01)       *H02P 21/24* (2016.01)

(52) Gemeinsame Patentklassifikation (CPC):
**H02P 6/182; G01D 3/028; G01D 5/2053; H02P 21/24**

(86) Internationale Anmeldenummer:
**PCT/EP2019/082840**

(87) Internationale Veröffentlichungsnummer:
**WO 2020/114872 (11.06.2020 Gazette 2020/24)**

(54) **VORRICHTUNG, ANORDNUNG UND VERFAHREN ZUR BESTIMMUNG EINES WINKELS ZWISCHEN EINEM ROTOR UND EINEM STATOR**

DEVICE, ARRANGEMENT AND METHOD FOR DETERMINING AN ANGLE BETWEEN A ROTOR AND A STATOR

DISPOSITIF, SYSTÈME ET PROCÉDÉ DE DÉTERMINATION D'UN ANGLE ENTRE UN ROTOR ET UN STATOR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.12.2018   DE 102018130972**

(43) Veröffentlichungstag der Anmeldung:
**13.10.2021   Patentblatt 2021/41**

(73) Patentinhaber: **HELLA GmbH & Co. KGaA 59557 Lippstadt (DE)**

(72) Erfinder:
• **IRLE, Henning**
  **59557 Lippstadt (DE)**
• **UTERMÖHLEN, Fabian**
  **59557 Lippstadt (DE)**

(56) Entgegenhaltungen:
**DE-A1-102010 042 134**

**Beschreibung**

Die Erfindung betrifft eine Vorrichtung, eine Anordnung und ein Verfahren zur Bestimmung eines Winkels zwischen einem Rotor und einem Stator.

Rotor und Stator sind insbesondere Teile von rotierenden elektrischen Maschinen, wobei hier besonders die Synchron- und die Asynchronmaschine eine übergeordnete Rolle spielen.

Die moderne Antriebstechnik, beispielsweise der Traktionsantrieb in Elektrofahrzeugen verwendet heutzutage häufig permanent erregte Synchronmaschinen.

Diese bestehen beispielsweise aus einem drehbar gelagerten Permanentmagneten, der innerhalb einem Statorspulensystem positioniert wird. Mit diesem wird ein Drehfeld erzeugt, welches den Rotor in Bewegung setzt. Prinzip-bedingt ist die Drehzahl des Stators und des Rotors identisch.

Um ein gewünschtes Drehmoment bereitzustellen, wird jedoch gezielt ein Phasenversatz eingestellt, so dass das Statorfeld dem Rotor um einen gewissen Winkelversatz vorauseilt. Hieraus ergibt sich die Forderung den Rotorlagewinkel zu ermitteln.

Aus dem Stand der Technik sind Rotorlagegeber in unterschiedlicher Weise bekannt.

Die DE 10 2010 042 134 A1 offenbart einen Elektromotor, insbesondere einen elektronisch kommutierten Elektromotor, wobei der Elektromotor einen Stator, einen Rotor, wenigstens einen Rotorpositionssensor und eine Steuereinheit aufweist, wobei der Rotorpositionssensor ausgebildet ist, eine Rotorposition des Rotors zu erfassen und ein die Rotorposition repräsentierendes Rotorpositionssignal zu erzeugen. Die Steuereinheit weist einen Eingang für das Rotorpositionssignal und einen Ausgang zum Verbinden mit dem Stator auf und ist ausgebildet, den Stator in Abhängigkeit des Rotorpositionssignals zum Drehbewegen des Rotors anzusteuern.

Ferner werden elektromagnetische Messumformer, sogenannte Resolver, zur Wandlung der Winkellage des Rotors in eine elektrische Größe genutzt. Hierbei handelt es sich um Spulenpakete, die um Spulenträger, als Statorwicklungen, gewickelt werden. Im Inneren befindet sich drehbar gelagert ein Rotor, der die Kopplung dieser Spulen durch eine entsprechende geometrische Ausgestaltung drehwinkelabhängig beeinflusst.

Alternative Sensorkonzepte basieren beispielsweise auf induktiven oder magnetischen Prinzipien. Hier sind beispielsweise Potentiometergeber, Inkrementalgeber oder Absolutwertgeber bekannt.

Bei resolverbasierten oder induktiven Sensortypen wird oft mit zwei-phasigen Systemen gearbeitet, bei denen zwei Statorwicklungen versetzt zueinander angeordnet sind. Wird die Rotorwicklung mit einer sinusförmigen Wechselspannung erregt, können die Statorwicklungen so angeordnet sein, dass die Amplituden der in den Statorwicklungen induzierten Spannungen dem Sinus und dem Kosinus der Winkellage des Rotors der zu untersuchenden elektrischen Maschine entsprechen.

Die Winkellage $\Phi$ errechnet sich dann aus den Amplituden $\alpha_1$ und $\alpha_2$.

Durch Division und anschließende Arcustangensberechnung kann auf den Winkel mit der Formel

$$\Phi = \arctan\frac{\alpha_1}{\alpha_2}$$

rückgerechnet werden.

Nachteilig an diesem Signalverarbeitungskonzept ist eine relativ lange Berechnungsdauer, da speziell die Division und die Arcustangensberechnung sehr zeitintensiv sind. Darüber hinaus müssen das sinusförmige und das kosinusförmige Signal vor der Berechnung korrigiert werden. Hier werden mindestens die Signaloffsets kompensiert und die Amplituden angeglichen. Vor allem bei magnetischen Sensoren kann, je nach physikalischem Messprinzip, auch eine Phasenkorrektur notwendig werden. All diese Schritte wirken sich negativ auf die Signallaufzeit aus.

Ein weiterer Nachteil des Standes der Technik ist, dass die nach diesem Prinzip ermittelten Winkel nach unterschiedlich langen Laufzeiten zur Verfügung stehen. So arbeitet dann beispielsweise das Steuergerät mit Daten, die eine unterschiedlich lange Verarbeitungszeit durchlaufen haben. Diese Variation in den Daten wirkt sich negativ auf die Genauigkeit der angestrebten Motorsteuerung aus. Je größer die Verarbeitungszeit ausfällt, desto älter kann zu einem gewissen Zeitpunkt der Messwert des Winkels sein. Benötigt beispielsweise das Steuergerät zyklisch eine Winkelinformation und die Berechnungszeit beträgt 50 $\mu$s, dann schwankt das Signalalter zwischen 0 zwischen 50 $\mu$s.

An diesem Punkt setzt die vorliegende Erfindung an.

Es ist die Aufgabe der vorliegenden Erfindung eine Vorrichtung zur Bestimmung eines Winkels zwischen einem Rotor und einem Stator darzulegen, eine Anordnung für ein solches Berechnungsmittel vorzuschlagen und ein Verfahren zum Betreiben einer solchen Vorrichtung vorzustellen, die es ermöglicht eine äußerst schnelle Winkelbestimmung durchzuführen, die in ihrer Berechnungsdauer nahezu frei von Variationen (Jitter) ist.

Die Aufgabe wird durch eine Vorrichtung nach Anspruch 1, eine Anordnung nach Anspruch 8 und ein Verfahren nach Anspruch 12 gelöst.

Eine erfindungsgemäße Vorrichtung zur Bestimmung eines ersten Winkels, zwischen einem Rotor und einem Stator, weist Eingänge zum Einlesen von einen ersten Winkel repräsentierenden Amplituden von über ein Sensorsystem erfassten elektrischen Signalen auf, wobei die Vorrichtung einen Winkelschätzer zum Schätzen eines zweiten Winkels aufweist, die Vorrichtung Mittel zur Ermittlung von den zweiten, geschätzten Winkel repräsentierenden Amplituden aufweist, die Vorrichtung mindestens eine Regelung aufweist, mit der mindestens eine Differenz zwischen den ersten Winkel repräsentierenden Amplituden und den zweiten, geschätzten Winkel repräsentierenden Amplituden minimierbar ist und über einen Ausgang der zweite, geschätzte Winkel bereitstellbar ist.

Vorteilhafterweise kann es vorgesehen sein, dass die Vorrichtung Mittel zur Berechnung der mindestens einen Differenz aufweist. Auf diese Weise werden die den ersten Winkel repräsentierenden Amplituden und die den zweiten, geschätzten Winkel repräsentierenden Amplituden verglichen und das Ergebnis dem Winkelschätzer erneut zugeführt.

Es besteht die Möglichkeit, dass die Vorrichtung die den zweiten, geschätzten Winkel repräsentierenden Amplituden über mindestens zwei Kanäle ermittelt.

Der zweite, geschätzte Winkel wird durch zwei Amplituden eindeutig repräsentiert, die über zwei unterschiedliche Kanäle berechnet und mit den zugehörigen Amplituden des ersten Winkels verglichen werden.

Daher ist es möglich, dass die Regelung den Winkelschätzer als Regler aufweist und mittels des Winkelschätzers der zweite, geschätzte Winkel variierbar ist, bis der Betrag der Differenzen der den ersten Winkel repräsentierenden Amplituden und der den zweiten Winkel repräsentierenden Amplituden kleiner einem vorgegebenen Wert ist.

Um eine schnelle Signallaufzeit zu ermöglichen, werden die Mittel zur Fehlerkorrektur des Sensorsystems an Punkten der Vorrichtung durchgeführt, die die Signallaufzeit möglichst wenig negativ beeinflussen.

Es ist daher vorteilhafterweise vorgesehen, dass die Vorrichtung Mittel zur Fehlerkorrektur des Sensorsystems aufweist, wobei die Fehlerkorrektur durch eine Änderung der Amplituden, Phasen und/oder Offsets der eingelesenen, den ersten Winkel repräsentierenden Amplituden durchführbar ist.

In diesem Fall wird die Fehlerkorrektur der eingelesenen Amplituden durchgeführt, bevor die eingelesenen Amplituden mit den ermittelten Amplituden verglichen werden.

Darüber hinaus oder an deren Stelle kann es vorgesehen sein, dass die Vorrichtung Mittel zur Fehlerkorrektur des Sensorsystems aufweist, wobei die Fehlerkorrektur durch eine Änderung der Amplituden, Phasen und/oder Offsets der ermittelten, den zweiten, geschätzten Winkel repräsentierenden Amplituden durchführbar ist.

In diesem Fall wird die Fehlerkorrektur der ermittelten Amplituden durchgeführt, bevor die ermittelten Amplituden mit den eingelesenen Amplituden verglichen werden.

Darüber hinaus oder an deren Stelle kann es vorgesehen sein, dass die Vorrichtung Mittel zur Fehlerkorrektur des Sensorsystems aufweist, wobei die Fehlerkorrektur durch eine Änderung des geschätzten Winkels durchführbar ist.

In diesem Fall wird die Fehlerkorrektur am Ende der Regelung durchgeführt und der zweite, geschätzte Winkel korrigiert.

Des Weiteren betrifft die Erfindung eine Anordnung zur Bestimmung eines ersten Winkels, zwischen einem Rotor und einem Stator. Die erfindungsgemäße Anordnung weist eine erfindungsgemäße Vorrichtung, ein Sensorsystem zum Erfassen von elektrischen Signalen und Mittel zur Ermittlung der den ersten Winkel repräsentierenden Amplituden von über das Sensorsystem erfassten elektrischen Signalen.

Zur Erfassung der elektrischen Signale kann es vorgesehen sein, dass das Sensorsystem mehrere Kanäle aufweist.

Darüber hinaus kann es vorgesehen sein, dass das Sensorsystem induktiv, kapazitiv, magnetisch oder nach einem anderen Messprinzip arbeitet.

Es ist möglich, dass die Fehlerkorrektur des Sensorsystems bereits erfolgt, bevor die den ersten Winkel repräsentierenden Amplituden von der Vorrichtung eingelesen werden. In diesem Fall kann es vorgesehen sein, dass die Anordnung Mittel zur Fehlerkorrektur des Sensorsystems aufweist, wobei die Fehlerkorrektur durch eine Änderung der Amplituden, Phasen und/oder Offsets der erfassten elektrischen Signale durchführbar ist.

Das Verfahren zum Betreiben einer erfindungsgemäßen Vorrichtung weist wenigstens die nachfolgenden Schritte auf:

- die den ersten Winkel repräsentierenden Amplituden von über ein Sensorsystem erfassten elektrischen Signalen werden von der Vorrichtung eingelesen,
- der Winkelschätzer schätzt den zweiten Winkel (Φ_est),
- die den zweiten Winkel repräsentierenden Amplituden werden ermittelt,
- die mindestens eine Differenz zwischen den ersten Winkel repräsentierenden Amplituden und den zweiten, geschätzten Winkel repräsentierenden Amplituden wird gebildet,
- die mindestens eine Differenz wird dem Winkelschätzer zugeführt,
- der Winkelschätzer schätzt unter Berücksichtigung der mindestens einen Differenz einen neuen zweiten Winkel (Φ_est),
- das Verfahren wird fortgeführt, bis der Betrag der Differenz kleiner einem festgelegten Wert ist,
- der Winkelschätzer stellt den zweiten, geschätzten Winkel über den Ausgang bereit.

Der Vorteil der vorliegenden Erfindung liegt darin, dass durch die Erfindung keine aufwändige Division und Arcustangensberechnung mehr benötigt wird, da eine Regelung zur Winkelbestimmung verwendet wird. Der Winkelschätzer variiert den zweiten, geschätzten Winkel so lange bis die ermittelten Amplituden nahezu identisch zu den eingelesenen Amplituden ist.

Dies ermöglicht extrem geringe Signallaufzeiten, die mindestens zehn Mal schneller sein sollten als die Dynamik der Eingangssignale.

Ein weiterer Vorteil dieser Winkelbestimmung ist eine konstante Signallaufzeit, so dass die Variation minimiert wird.

Anhand der beigefügten Zeichnungen wird die Erfindung nachfolgend näher erläutert. Dabei zeigt:

Fig. 1 Blockschaltbild einer ersten erfindungsgemäßen Anordnung zur Bestimmung eines Winkels zwischen einem Rotor und einem Stator

Fig. 2 Blockschaltbild einer erfindungsgemäßen Anordnung mit ersten Mitteln zur Fehlerkorrektur der den ersten Winkel repräsentierenden, über ein Sensorsystem erfassten, elektrischen Signalen oder Amplituden (Darstellung nur eines Kanals ohne Beschränkung der Allgemeinheit)

Fig. 3 Blockschaltbild einer erfindungsgemäßen Anordnung mit zweiten Mitteln zur Fehlerkorrektur der den zweiten, geschätzten Winkel repräsentierenden Amplituden (Darstellung nur eines Kanals ohne Beschränkung der Allgemeinheit)

Fig. 4 Blockschaltbild einer erfindungsgemäßen Anordnung mit dritten Mitteln zur Fehlerkorrektur durch eine Änderung des zweiten, geschätzten Winkels (Darstellung nur eines Kanals ohne Beschränkung der Allgemeinheit)

In den Figuren werden gleiche Bauteile mit gleichen Bezugszeichen versehen.

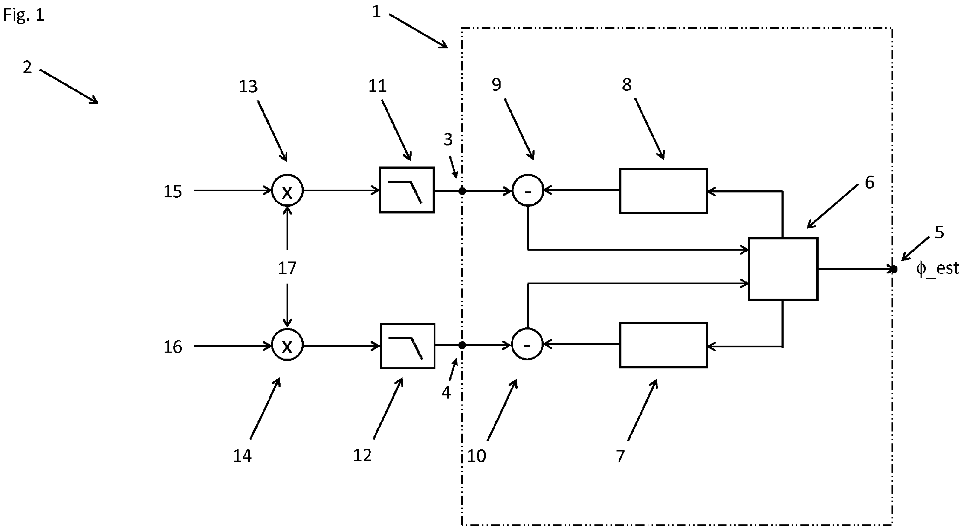

In Fig. 1 wird ein Blockschaltbild einer ersten erfindungsgemäßen Anordnung 2 zur Bestimmung eines Winkels Φ_est zwischen Rotor und Stator gezeigt.

Das Blockschaltbild zeigt eine Anordnung 2 mit zwei Kanälen, die allerdings ohne Einschränkung auf Anordnungen einer anderen Anzahl von Kanälen übertragbar ist.

Die von einem Sensorsystem erfassten elektrischen Signale 15, 16 werden der Anordnung 2 übergeben. Das Sensorsystem ist in dem vorliegenden Blockschaltbild nicht näher dargestellt, da es im Stand der Technik allgemein bekannt ist. Die dargestellte Ausführungsform basiert auf einem zweikanaligen induktiven Sensor. Es sind hierbei durchaus Sensorsysteme mit mehr oder weniger Kanälen und mit anderen Messprinzipien, wie beispielsweise magnetische und/oder kapazitive Messprinzipien vorstellbar.

Prinzipiell besteht das Sensorsystem im dargestellten Fall aus einer Erregerspule, die mit einer Wechselspannung beaufschlagt wird, die eine Frequenz zwischen 1 MHz und 10 MHz, vorzugsweise 3,5 MHz sowie Amplituden im Bereich weniger Volt aufweist.

Die Erregerspule wird vorzugsweise als frequenzbestimmendes Element in einem LC Schwingkreis verschaltet und bevorzugt im Wesentlichen spiralförmig auf einer Leiterplatte ausgeführt. Innerhalb oder außerhalb der Erregerspule befinden sich zwei Empfangsspulen, die eine im Wesentlichen identische Geometrie aufweisen, allerdings um einen Winkel τ zueinander verdreht sind.

Hierbei gilt für zweiphasige Systeme der Zusammenhang

$$\tau = \frac{360°}{4 * \Phi\_meas},$$

wobei Φ_meas den Messbereich (Eineindeutigkeitsbereich) des Sensors darstellt, der bevorzugt ein ganzzahliger Teiler von 360° ist. Durch ein drehbar gelagertes, elektrisch leitfähiges Element, welches beabstandet zu den Spulen platziert wird, werden die in den Empfangsspulen induzierten elektrischen Signale (Spannungen) in Folge des elektromagnetischen Wechselfeldes der Erregerspule, drehwinkelabhängig beeinflusst.

Da lediglich die Amplituden 3, 4 der elektrischen Signale 15, 16 die erforderliche Winkelinformation tragen, umfasst die Anordnung 2 Mittel zur Ermittlung der Amplitudenwerte 11, 12, 13, 14 von über ein Sensorsystem erfassten elektrischen Signalen 15, 16.

In Fig. 1 werden die Amplituden durch Synchrondemodulation mit dem Träger 17 (Erregersignal) ermittelt. Die geschieht durch Multiplikation mittels Multiplizierern 13, 14 mit der Erregerspannung. Anschließend erfolgt eine Tiefpassfilterung 11, 12. Diese Filter weisen bevorzugt Grenzfrequenzen im Bereich weniger zehn bis weniger hundert kHz auf.

Selbstverständlich sind auch andere Verfahren zur Ermittlung der Amplituden 3, 4 möglich wie beispielsweise Digitalisierung der ermittelten elektrischen Signale und Anwendung eines Algorithmus zur Bestimmung der Maxima.

Aus den Amplituden 3, 4 kann nach bekannten Verfahren der erste Winkel Φ ermittelt werden. Die Amplituden 3, 4 sind daher repräsentativ für den ersten Winkel Φ.

An den Eingängen werden die ermittelten Amplituden 3, 4 an die Vorrichtung übergeben.

Anstatt aus den Amplituden 3, 4 einen Winkel Φ zu berechnen, wird in der vorliegenden Ausführungsform ein Winkelschätzer 6 eingesetzt, der einen zweiten Winkel Φ_est schätzt.

Für die Schätzung des zweiten Winkels Φ_est gibt es mehrere Ansätze. Es ist denkbar, dass zunächst der letzte Winkel genutzt wird, bei dem die elektrische Maschine ausgeschaltet wurde. Dies würde allerdings die Verwendung eines Speichers bedeuten. Ebenso kann der zweite Winkel Φ_est zunächst geraten werden. Hierzu kann beispielsweise ein Random Number Generator genutzt werden. Außerdem besteht die Möglichkeit als Startwert für die Winkelschätzung jeweils den Wert 0 anzunehmen. Sicherlich können auch andere Methoden zur Schätzung des zweiten, geschätzten Winkels Φ_est in Betracht kommen.

Zu diesem zweiten, geschätzten Winkel Φ_est werden die repräsentierenden Amplituden 7, 8 ermittelt.

Die Ermittlung der repräsentierenden Amplituden 7, 8 kann beispielsweise über eine Look-Up-Table erfolgen, in der die Amplituden zu den Winkeln gespeichert sind. Auch hier sind andere Ansätze denkbar, wie möglicherweise die Berechnung der Amplituden.

Die übergebenen Amplituden 3, 4 sowie die ermittelten Amplituden 7, 8 werden mindestens einem Mittel zur Bildung einer Differenz 9, 10 zugeführt, der die Differenzen zwischen den ersten Winkel Φ repräsentierenden Amplituden 3, 4 und den zweiten, geschätzten Winkel Φ_est repräsentierenden Amplituden 7, 8 bildet.

Diese Differenzen 9, 10 werden dem Winkelschätzer 6 zugeführt, so dass der Winkelschätzer 6 unter Berücksichtigung der zugeführten Differenzen 9, 10 einen neuen zweiten Winkel Φ_est schätzen kann. Das Verfahren wird fortgeführt, bis der Betrag der Differenz 9, 10 kleiner einem festgelegten Wert ist.

Durch das beschriebene Verfahren der Rekursion nach Art einer Regelung wird die Winkelbestimmung ohne zeitaufwändige Berechnung aus den repräsentierenden Amplituden 3, 4 sondern durch rekursive Annäherung an einen gewünschten Wert durchgeführt.

Da reale Systeme in der Regel nicht ideal sind, kann es sinnvoll sein, Fehlerkorrekturen vorzunehmen. Bei dem der in Fig. 1 dargestellten erfindungsgemäßen Anordnung 2 zugrunde liegenden induktiven Sensorsystem können sich die Fehler unter anderem durch Toleranzen (beispielsweise Exzentrizität zwischen Rotor und Stator), durch Temperatur- und/oder Alterungseffekte sowie durch das Design selbst ergeben.

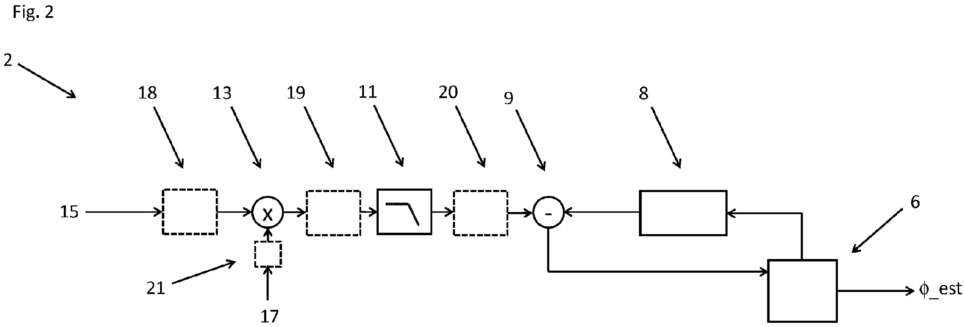

Fig. 2 zeigt ein Blockschaltbild einer erfindungsgemäßen Anordnung 2 mit ersten Mitteln zur Fehlerkorrektur 18, 19, 20, 21 der den ersten Winkel Φ repräsentierenden, über ein Sensorsystem erfassten, elektrischen Signalen 15, 16 oder Amplituden 3, 4.

Es wird aus Gründen der Übersichtlichkeit nur ein Kanal dargestellt. Selbstverständlich gelten alle Fehlerkorrekturmöglichkeiten auch für jeden weiteren Kanal.

In Fig. 2 dargestellt ist der obere Kanal aus Fig. 1. Die Amplituden 3, 4 der erfassten elektrischen Signale 15, 16 zu einem ersten Winkel Φ werden über die Eingänge an die Vorrichtung 1 übergeben. Der Winkelschätzer 6 schätzt einen zweiten Winkel Φ_est und die zugehörige Amplitude 8 wird ermittelt. Die mindestens eine Differenz 9 der Amplitude 8 wird an den Winkelschätzer 6 zurückgegeben.

Erweitert wird das Blockschaltbild um verschiedene Möglichkeiten der Fehlerkorrektur 18, 19, 20 von den ersten Winkel Φ repräsentierenden, über ein Sensorsystem erfassten, elektrischen Signalen 15 oder Amplituden 8.

Die Fehlerkorrektur kann vor und/oder nach der Demodulation 13 der erfassten elektrischen Signale 15 erfolgen, wobei nur eine dieser Fehlerkorrekturen 18, 19, 20 oder auch mehrere Fehlerkorrekturen 18, 19, 20 vorgesehen sein können.

Durch die aufgezeigten Fehlerkorrekturen 18, 19 ,20 ist es möglich Gleich- oder Wechselsignale (wie höhere Harmonische) zu addieren oder zu subtrahieren, um Amplituden, Phasen und Offsets der eingelesenen Amplituden 15 des ersten Winkels Φ zu verändern.

Die Fehlerkorrekturen 18, 19, 20, 21 können im Analog- und/oder Digitalteil einer Auswerteelektronik implementiert sein. Es ist außerdem möglich bei der Fehlerkorrektur weitere Einflussgrößen zu berücksichtigen.

Die durchzuführende Fehlerkorrektur 21 kann alternativ oder zusätzlich auf das Trägersignal 17 wirken und dieses in Amplitude, Phase, Offset oder Frequenz dynamisch anpassen.

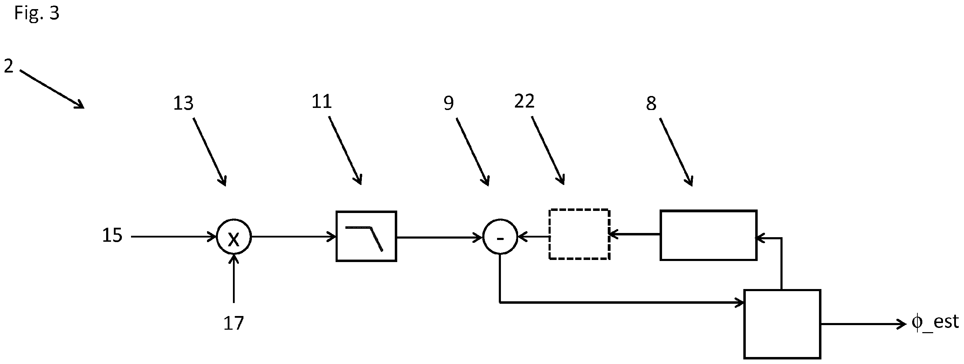

In Fig. 3 wird eine weitere Möglichkeit mit zweiten Mitteln zur Fehlerkorrektur 22 der den zweiten, geschätzten Winkel Φ_est repräsentierenden Amplituden 8 gezeigt.

An dieser Stelle wird die Fehlerkorrektur 22 im Anschluss an die ermittelten Amplitudenwerte 8 des zweiten, geschätzten Winkels Φ_est durchgeführt.

Die durchgeführten Korrekturen und die Abhängigkeit von weiteren Einflussgrößen entsprechen den Ausführungen zu Fig. 2.

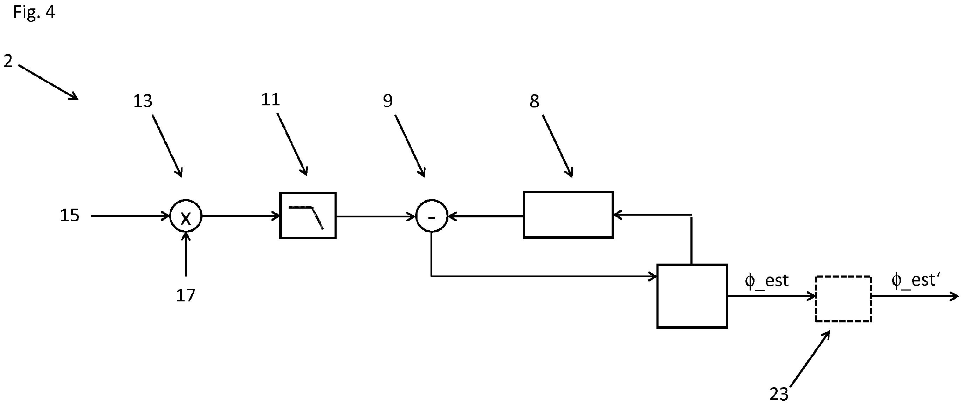

Fig. 4 zeigt die Fehlerkorrektur mit dritten Mitteln 23 durch eine Änderung des zweiten, geschätzten Winkels Φ_est. Es wird am Ende der Regelung der ausgegebene Winkel Φ_est korrigiert und ein neuer Ausgangswinkel Φ_est' erzeugt.

Die Fehlerkorrektur 23 für den geschätzten Winkel Φ_est kann beispielsweise eine Look-Up-Table (LUT) enthalten und jedem geschätzten Winkel Φ_est einen neuen Ausgangswinkel Φ_est' zuordnen. Die hinterlegte LUT kann durch unterschiedliche Verfahren erzeugt und optional zyklisch angepasst werden.

Denkbar ist hier unter anderem eine Kalibrierung oder bekannte Verfahren im Bereich des Machine Learning.

Bezugszeichenliste

| 1 | Vorrichtung zur Bestimmung eines Winkels zwischen Rotor und Stator |
|---|---|
| 2 | Anordnung |
| 3, 4 | einen ersten Winkel repräsentierenden Amplituden |
| 5 | Ausgang, der den zweiten, geschätzten Winkel bereitstellt |
| 6 | Winkelschätzer |
| 7, 8 | Mittel zur Ermittlung von den zweiten, geschätzten Winkel repräsentierenden Amplituden |
| 9, 10 | Mittel zur Berechnung mindestens einer Differenz |
| 11 ,12 | Tiefpassfilterung |
| 13 ,14 | Multiplizierer |
| 15, 16 | über ein Sensorsystem erfasste elektrische Signale |
| 17 | Träger |
| 18, 19, 20, 21 | erste Mittel zur Fehlerkorrektur |

| 22 | zweite Mittel zur Fehlerkorrektur |
| 23 | dritte Mittel zur Fehlerkorrektur |
| Φ | erster Winkel |
| Φ_est | zweiter, geschätzter Winkel |
| Φ_est' | zweiter, geschätzter. korrigierter Winkel |

**Patentansprüche**

1. Vorrichtung (1), zur Bestimmung eines ersten Winkels (Φ), zwischen einem Rotor und einem Stator, aufweisend Eingänge zum Einlesen von einen ersten Winkel (Φ) repräsentierenden Amplituden (3, 4) von über ein Sensorsystem erfassten elektrischen Signalen (15, 16), **dadurch gekennzeichnet, dass**

   - die Vorrichtung (1) einen Winkelschätzer (6) zum Schätzen eines zweiten Winkels (Φ_est) aufweist,
   - die Vorrichtung (1) Mittel zur Ermittlung (7, 8) von den zweiten, geschätzten Winkel (Φ_est) repräsentierenden Amplituden (7, 8) aufweist,
   - die Vorrichtung (1) mindestens eine Regelung aufweist, mit der mindestens eine Differenz (9, 10) zwischen den ersten Winkel (Φ) repräsentierenden Amplituden (3, 4) und den zweiten, geschätzten Winkel (Φ_est) repräsentierenden Amplituden (7, 8) minimierbar ist,
   - über einen Ausgang (5) der zweite, geschätzte Winkel (Φ_est) bereitstellbar ist.

2. Vorrichtung (1) nach Anspruch 1, **dadurch gekennzeichnet, dass** die Vorrichtung (1) Mittel zur Berechnung (9, 10) der mindestens einen Differenz aufweist.

3. Vorrichtung (1), nach Anspruch 1 bis 2, **dadurch gekennzeichnet, dass** die Vorrichtung (1) die den zweiten, geschätzten Winkel (Φ_est) repräsentierenden Amplituden (7, 8) über mindestens zwei Kanäle ermittelt.

4. Vorrichtung (1), nach einem der Ansprüche 1 bis 3, **dadurch gekennzeichnet, dass** die Regelung den Winkelschätzer (6) als Regler aufweist und mittels des Winkelschätzers (6) der zweite, geschätzte Winkel (Φ_est) variierbar ist, bis der Betrag der Differenzen (9, 10) der den ersten Winkel (Φ) repräsentierenden Amplituden (3, 4) und der den zweiten, geschätzten Winkel (Φ_est) repräsentierenden Amplituden (7, 8) kleiner einem vorgegebenen Wert ist.

5. Vorrichtung (1), nach einem der Ansprüche 1 bis 4, **dadurch gekennzeichnet, dass** die Vorrichtung (1) Mittel zur Fehlerkorrektur (20) des Sensorsystems aufweist, wobei die Fehlerkorrektur (20) durch eine Änderung der Amplituden, Phasen und/oder Offsets der eingelesenen, den ersten Winkel (Φ) repräsentierenden Amplituden (3, 4) durchführbar ist.

6. Vorrichtung (1), nach einem der Ansprüche 1 bis 5, **dadurch gekennzeichnet, dass** die Vorrichtung (1) Mittel zur Fehlerkorrektur (22) des Sensorsystems aufweist, wobei die Fehlerkorrektur (22) durch eine Änderung der Amplituden, Phasen und/oder Offsets der ermittelten, den zweiten, geschätzten Winkel (Φ_est) repräsentierenden Amplituden (7, 8) durchführbar ist.

7. Vorrichtung (1), nach einem der Ansprüche 1 bis 6, **dadurch gekennzeichnet, dass** die Vorrichtung (1) Mittel zur Fehlerkorrektur (23) des Sensorsystems aufweist, wobei die Fehlerkorrektur (23) durch eine Änderung des geschätzten Winkels (Φ_est) durchführbar ist.

8. Anordnung (2) zur Bestimmung eines ersten Winkels (Φ), zwischen einem Rotor und einem Stator, aufweisend

   - eine Vorrichtung (1) nach den Ansprüchen 1 bis 7,
   - ein Sensorsystem zum Erfassen von elektrischen Signalen,
   - Mittel zur Ermittlung (11, 12, 13, 14) der den ersten Winkel (Φ) repräsentierenden Amplituden (3, 4) von über das Sensorsystem erfassten elektrischen Signalen (15, 16).

9. Anordnung (2), nach Anspruch 8, **dadurch gekennzeichnet, dass** das Sensorsystem mehrere Kanäle aufweist.

10. Anordnung (2), nach einem der Ansprüche 8 bis 9, **dadurch gekennzeichnet, dass** das Sensorsystem induktiv, kapazitiv, magnetisch oder nach einem anderen Messprinzip ausgeführt ist.

11. Anordnung (2), nach einem der Ansprüche 8 bis 10, **dadurch gekennzeichnet, dass** die Anordnung (2) Mittel zur Fehlerkorrektur (18, 19, 21) des Sensorsystems aufweist, wobei die Fehlerkorrektur durch eine Änderung der Amplituden, Phasen und/oder Offsets der erfassten elektrischen Signale (15, 16) durchführbar ist.

12. Verfahren zum Betreiben einer Vorrichtung (1) gemäß Anspruch 1 bis 7, wobei das Verfahren wenigstens die nachfolgenden Schritte aufweist:

   - die den ersten Winkel (Φ) repräsentierenden Amplituden (3, 4) von über ein Sensorsystem erfassten elektrischen Signalen (15, 16) werden von der Vorrichtung (1) eingelesen,

- der Winkelschätzer (6) schätzt den zweiten Winkel (Φ_est),
- die den zweiten, geschätzten Winkel (Φ_est) repräsentierenden Amplituden (7, 8) werden ermittelt,
- die mindestens eine Differenz (9, 10) zwischen den ersten Winkel (Φ) repräsentierenden Amplituden (3, 4) und den zweiten, geschätzten Winkel (Φ_est) repräsentierenden Amplituden (7, 8) wird gebildet,
- die mindestens eine Differenz (9, 10) wird dem Winkelschätzer (6) zugeführt,
- der Winkelschätzer (6) schätzt unter Berücksichtigung der mindestens einen Differenz (9, 10) einen neuen zweiten Winkel (Φ_est),
- das Verfahren wird fortgeführt, bis der Betrag der mindestens einen Differenz (9, 10) kleiner einem festgelegten Wert ist,
- der Winkelschätzer (6) stellt den zweiten, geschätzten Winkel (Φ_est) über den Ausgang (5) bereit.

**Claims**

1. Device (1), for determining a first angle (Φ) between a rotor and a stator, having inputs for reading in amplitudes (3, 4) representing a first angle (Φ) from electric signals detected via a sensor system (15, 16), **characterized in that**

   - the device (1) features an angle estimator (6) for estimating a second angle (Φ_est),
   - the device (1) features means (7, 8) for determining amplitudes (7, 8) representing the second, estimated angle (Φ_est),
   - the device (1) features at least one control with which at least one difference (9, 10) between the amplitudes (3, 4) representing the first angle (Φ) and the amplitudes (7, 8) representing the second, estimated angle (Φ_est) can be minimized,
   - the second, estimated angle (Φ_est) can be provided via an output (5).

2. Device (1) in accordance with claim 1, **characterized in that** the device (1) features means of calculating (9, 10) the at least one difference.

3. Device (1) in accordance with claims 1 through 2, **characterized in that** the device (1) determines the amplitudes (7, 8) representing the second, estimated angle (Φ_est) via at least two channels.

4. Device (1) in accordance with one of claims 1 through 3, **characterized in that** the control features the angle estimator (6) as a control unit and the angle estimator (6) can be used to vary the second, estimated angle (Φ_est) until the amount of the differences (9, 10) of the amplitudes (3, 4) representing the first angle (Φ) and the amplitudes (7, 8) representing the second, estimated angle (Φ_est) is smaller than a specified value.

5. Device (1), in accordance with one of claims 1 through 4, **characterized in that** the device (1) features means of error correction (20) of the sensor system, where the error correction (20) can be performed by changing the amplitudes, phases and/or offsets of the read-in amplitudes (3, 4) representing the first angle (Φ).

6. Device (1) in accordance with one of claims 1 through 5, **characterized in that** the device (1) features means of error correction (22) of the sensor system, where the error correction (22) can be performed by changing the amplitudes, phases and/or offsets of the determined amplitudes (7, 8) representing the second, estimated angle (Φ_est).

7. Device (1) in accordance with one of claims 1 through 6, **characterized in that** the device (1) features means of error correction (23) of the sensor system, where the error correction (23) can be performed by changing the estimated angle (Φ_est).

8. Arrangement (2) for determining a first angle (Φ) between a rotor and a stator, featuring

   - a device (1) in accordance with claims 1 through 7,
   - a sensor system for detecting electric signals,
   - means for determining (11, 12, 13, 14) the amplitudes (3, 4) representing the first angle (Φ) from electric signals detected via the sensor system (15, 16).

9. Arrangement (2) in accordance with claim 8, **characterized in that** the sensor system features several channels.

10. Arrangement (2) in accordance with one of claims 8 through 9, **characterized in that** the sensor system is designed as being inductive, capacitive, magnetic or in accordance with another measurement principle.

11. Arrangement (2) in accordance with one of claims 8 through 10, **characterized in that** the arrangement (2) features means of error correction (18, 19, 21) of the sensor system, where the error correction can be performed by changing the amplitudes, phases and/or offsets of the detected electric signals (15, 16).

**12.** Method for operating a device (1) according to claims 1 through 7, where the method features at least the following steps:

- the amplitudes (3, 4) representing the first angle (Φ) from electric signals (15, 16) detected via a sensor system are read in by the device (1),
- the angle estimator (6) estimates the second angle (Φ_est),
- the amplitudes (7, 8) representing the second, estimated angle (Φ_est) are determined,
- the at least one difference (9, 10) between the amplitudes (3. 4) representing the first angle (Φ) and the amplitudes (7, 8) representing the second, estimated angle (Φ_est) is formed,
- the at least one difference (9, 10) is directed to the angle estimator (6),
- the angle estimator (6) estimates a new second angle (Φ_est) taking into account the at least one difference (9, 10),
- the method is continued until the amount of the at least one difference (9, 10) is smaller than a specified value,
- the angle estimator (6) provides the second, estimated angle (Φ_est) via the output (5).

**Revendications**

**1.** Dispositif (1) pour déterminer un premier angle (Φ) entre un rotor et un stator, présentant des entrées pour la lecture d'amplitudes (3, 4) représentant un premier angle (Φ) de signaux électriques (15, 16) détectés par un système de capteurs, **caractérisé en ce que**

- le dispositif (1) comprend un estimateur d'angle (6) pour estimer un deuxième angle (Φ_est),
- le dispositif (1) comporte des moyens pour déterminer (7, 8) des amplitudes (7, 8) représentant le deuxième angle estimé (Φ_est),
- le dispositif (1) comporte au moins une régulation permettant de minimiser au moins une différence (9, 10) entre les amplitudes (3, 4) représentant le premier angle (Φ) et les amplitudes (7, 8) représentant le deuxième angle estimé (Φ_est),
- le deuxième angle estimé (Φ_est) peut être mis à disposition via une sortie (5).

**2.** Dispositif (1) selon la revendication 1 **caractérisé en ce que** le dispositif (1) comporte des moyens pour calculer (9, 10) au moins une différence.

**3.** Dispositif (1), selon les revendications 1 à 2, **caractérisé en ce que** le dispositif (1) détermine les amplitudes (7, 8) représentant le deuxième angle estimé (Φ_est) sur au moins deux canaux.

**4.** Dispositif (1) selon l'une des revendications 1 à 3 **caractérisé en ce que** la régulation comporte l'estimateur d'angle (6) en tant que régulateur et **en ce que** l'estimateur d'angle (6) permet de varier le deuxième angle estimé (Φ_est) jusqu'à ce que la valeur des différences (9, 10) des amplitudes (3, 4) représentant le premier angle (Φ) et des amplitudes (7, 8) représentant le deuxième angle estimé (Φ_est) soit inférieure à une valeur prédéfinie.

**5.** Dispositif (1) selon l'une des revendications 1 à 4 **caractérisé en ce que** le dispositif (1) comporte des moyens de correction des erreurs (20) du système de capteurs, la correction des erreurs (20) étant réalisable par une modification des amplitudes, phases et/ou décalages des amplitudes lues (3, 4) représentant le premier angle (Φ).

**6.** Dispositif (1) selon l'une des revendications 1 à 5 **caractérisé en ce que** le dispositif (1) comporte des moyens de correction des erreurs (22) du système de capteurs, la correction des erreurs (22) étant réalisable par une modification des amplitudes, phases et/ou décalages des amplitudes déterminées (7, 8) représentant le deuxième angle estimé (Φ_est).

**7.** Dispositif (1) selon l'une des revendications 1 à 6 **caractérisé en ce que** le dispositif (1) comporte des moyens de correction des erreurs (23) du système de capteurs, la correction des erreurs (23) étant réalisable par une modification de l'angle estimé (Φ_est).

**8.** Configuration (2) permettant de déterminer un premier angle (Φ), entre un rotor et un stator, comprenant

- un dispositif (1) selon les revendications 1 à 7,
- un système de capteurs pour détecter des signaux électriques,
- des moyens de détermination (11, 12, 13, 14) des amplitudes (3, 4) de signaux électriques (15, 16) détectés par le système de capteurs représentant le premier angle (Φ).

**9.** Configuration (2) selon la revendication 8 **caractérisée en ce que** le système de capteurs comporte plusieurs canaux.

**10.** Configuration (2) selon l'une des revendications 8 à 9 **caractérisée par** un système de capteurs inductif, capacitif, magnétique ou réalisé selon un autre principe de mesure.

**11.** Configuration (2) selon l'une des revendications 8 à 10 **caractérisée en ce que** la configuration (2) comporte des moyens de correction des erreurs (18, 19, 21) du système de capteurs, la correction des erreurs étant réalisable par une modification des amplitudes, phases et/ou décalages des signaux électriques (15, 16) détectés.

12. Procédé de mise en oeuvre d'un dispositif (1) selon les revendications 1 à 7, le procédé comprenant au moins les étapes suivantes :

- les amplitudes (3, 4) de signaux électriques (15, 16) détectés par un système de capteurs représentant le premier angle (Φ) sont lues par le dispositif (1),
- l'estimateur d'angle (6) estime le deuxième angle (Φ_est),
- les amplitudes (7, 8) représentant le deuxième angle estimé (Φ_est) sont déterminées,
- au moins une différence (9, 10) entre les amplitudes (3, 4) représentant le premier angle (Φ) et les amplitudes (7, 8) représentant le deuxième angle estimé (Φ_est) est calculée,
- au moins une différence (9, 10) Est fournie à l'estimateur d'angle (6),
- l'estimateur d'angle (6) estime un nouveau deuxième angle (Φ_est) en tenant compte d'au moins une différence (9, 10),
- le procédé est poursuivi jusqu'à ce que la valeur de ladite différence (9, 10) soit inférieure à une valeur déterminée,
- l'estimateur d'angle (6) fournit le deuxième angle estimé (Φ_est) via la sortie (5).

Fig. 1

$\phi\_est$

Fig. 2

2

8

9

20

11

19

13

18

15

17

21

6

φ_est

Fig. 3

EP 3 891 882 B1

Fig. 4

**EP 3 891 882 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010042134 A1